# EUROPEAN PATENT SPECIFICATION

(11) **EP 2 748 984 B1**
(45) Date of publication and mention of the grant of the patent: **18.05.2016**
(21) Application number: 12770371.8
(22) Date of filing: 20.09.2012
(51) Int. Cl.: H04L 12/801

(54) **APPARATUS AND METHOD FOR LOAD BALANCING IN A CABLE NETWORK**
VORRICHTUNG UND VERFAHREN ZUM LASTAUSGLEICH IN EINEM KABELNETZWERK
APPAREIL ET PROCÉDÉ D'ÉQUILIBRAGE DE CHARGE DANS UN RÉSEAU CÂBLÉ

(30) Priority: 11.10.2011 US 201113270756
(43) Date of publication of application: 02.07.2014
(73) Proprietor: Motorola Mobility LLC, Libertyville, IL 60048 (US)
(72) Inventor: RAMACHANDRAN, Anita, Bangalore 560067 (IN); PATRICK, Michael, W., Assonet, Massachusetts 02702 (US); RAMANATHAN, Uma, Bangalore 560093 (IN); VIJAYARAGHAVAN, Nithya, Bangalore 560008 (IN)
(74) Representative: Openshaw & Co.
(86) International application number: PCT/US2012/056338
(87) International publication number: WO 2013/055509

(56) References cited:
- US-A1- 2011 019 551
- US-B1- 6 822 940
- US-B1- 6 999 420

## Description

### FIELD

Apparatus and method for providing load balancing of active traffic across multiple channels of a Data-Over-Cable (DOC) network are described.

### BACKGROUND

Cable television networks typically comprise cables such as coaxial cables, optical fiber cables, or a Hybrid Fiber/Coaxial (HFC) cable system which interconnect cable modems (CMs) of subscribers to a headend of the cable network. Subscribers may use their cable modems and the cable network to connect to the Internet and/or other computer networks. The cable modems support data connection to the Internet and other computer networks via the cable network, and the cable networks provide bi-directional communication systems in which data can be sent downstream from the headend to a subscriber and upstream from a subscriber to the headend.

A Cable Modem Termination System (CMTS) is equipment that is located at the headend of the cable network and that is able to receive data packets from a data network and transmit the data packets downstream via the cable network to a cable modem attached to customer premises equipment (CPE). The customer premises equipment can send signals to the cable modem which, in turn, sends data packets upstream via the cable network to the CMTS. The CMTS then sends the data packets back to the appropriate host on the data network. An example of a CMTS is the Motorola Broadband Service Router 64000 (BSR 64000).

The term DOCSIS (Data Over Cable System Interface Specification) refers to a group of specifications that define industry standards for cable headend and cable modem equipment. The types of traffic, referred to as service flows, transmitted across a DOCSIS network can vary and may include, for instance, text-based Web browsing, file transferring, email communications, voice and video communications, and the like. Thus, for instance, customer premises equipment (CPE) may include a telephone or other device capable of sending and receiving video or voice signals via the cable modem and cable network. In such cases, the cable modem will typically have an internal or embedded Media Terminal Adapter (eMTA) which provides network interface functionality that accepts analog voice inputs or video signal and generates IP packets. Voice and video communications tend to require greater throughput rates for acceptable levels of service than that of the other service flows referenced above. The different types of service flows communicated over the cable network may have different Quality of Service parameters and requirements.

When a user registers a cable modem to use a DOCSIS-compliant network, a series of handshaking steps are initially executed during which the modem identifies itself and the network designates (among other parameters) the level of service and frequency (channel) that the cable modem may use. After registration is complete, the cable modem may periodically or occasionally request the creation of service flows and, if allowed, the allocation of bandwidth to transmit data to the CMTS in the upstream direction.

Typically, thousands of cable modems are connected to each CMTS, and a number of customer premises equipment (CPE), such as computers, Voice-over-Internet-Protocol (VoIP) compliant devices, wireless routers, portable hand-held devices, smartphones and the like, communicate with each cable modem at the subscriber location. Many users typically share a channel, or a group of channels, and their interests compete for the bandwidth of the channel. The full bandwidth available to the multi-channel network for data transmission comprises the sum of bandwidths of the individual channels. Overcrowding of traffic on any one channel will cause degraded performance to a user on that channel.

To address the need to distribute traffic across upstream and/or downstream channels, a CMTS can be set to implement algorithms to provide load balancing for traffic across multiple channels. The algorithms are applied to a set of cable modems using a set of channels referred to as a "load balancing group". Three such techniques used for distributing voice, video, data and other traffic across upstream and downstream channels include manual, static and dynamic load balancing. For example, after registration, cable modems can be manually moved by the actions of operation personnel to balance the number of cable modems evenly among a defined group of upstream channels. In contrast, static upstream load balancing can be utilized to automatically move a newly registered cable modem to a least-loaded upstream channel. Conventionally, static load balancing has been based solely on cable modem count on each upstream channel. As a further alternative, dynamic load balancing can be used to automatically move cable modems from a channel with highest utilization to a channel with lowest utilization in an attempt to more evenly distribute active traffic across upstream and/or downstream channels within a defined load balancing group. In yet another alternative, a particular transmission may be stopped, if sufficient bandwidth is not available. An example of this alternative is provided in U.S. Patent 6,822,940.

Conventionally, algorithms for dynamic load balancing have taken into account actual bandwidth utilization of each channel that is configured for a load balancing group, actual bandwidth utilized by each modem on the highest utilized channel, and pre-set utilization thresholds. For example, if one channel is operating at 70% utilization capacity and another is being operated only at 30% utilization capacity, dynamic load balancing may be automatically implemented to balance the traffic on the channels. However, if the delta between the two channels is relatively small (i.e., less than a pre-set threshold value), dynamic load balancing may not be implemented by the CMTS at a given point in time.

When thresholds are met and load balancing is performed by the CMTS, cable modems are caused to be moved across channels while they are actively passing traffic. This is achieved as discussed above by considering certain channel parameters, such as utilization, number of cable modems on the channel, or number of active service flow identifiers on the channel. With conventional load balancing techniques as discussed above, it is possible that a cable modem generating traffic that has service flows with relatively high Quality of Service (QoS) attributes and requirements may be selected for being moved to another channel. Quality of Service generally refers to the speed and reliability of data transmission and like performance parameters needed for an acceptable or guaranteed level of service. An example of one such QoS parameter is Minimum Reserved Rate (MRR). Conventional load balancing techniques ignore QoS parameters of modem service flows, relying only on the currently active utilization of the cable modem. Multiple movements of active cable modems according to conventional techniques across channels may result in an aggregation of currently inactive cable modems with high QoS requirements on the same channel. When any such aggregated, high-QoS cable modem becomes active, it may be unable to achieve its required QoS. This can result in service interruption for those cable modems or, alternatively, a required interruption of load balancing.

### SUMMARY

This disclosure describes a method of load balancing cable modems across multiple channels of a Data Over Cable System Interface Specification (DOCSIS) network according to claim 1.

This disclosure also describes a signal processing electronic device for communicating with cable modems across channels of a load balancing group on a Data Over Cable System Interface Specification (DOCSIS) network according to claim 9.

Yet further, this disclosure describes at least one non-transitory computer readable storage medium having computer program instructions stored according to claim 16.

### BRIEF DESCRIPTION OF THE DRAWINGS

Various features of the embodiments described in the following detailed description can be more fully appreciated when considered with reference to the accompanying figures, wherein the same numbers refer to the same elements.
FIG. 1 illustrates an exemplary cable network system in accordance with an embodiment.
FIG. 2 illustrates an exemplary CMTS architecture in accordance with an embodiment.
FIG. 3 is a flowchart illustrating a procedure for selecting cable modems of a load balancing group for being moved from a channel of highest utilization to a channel of lesser utilization in accordance with an embodiment.

### DETAILED DESCRIPTION

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments.

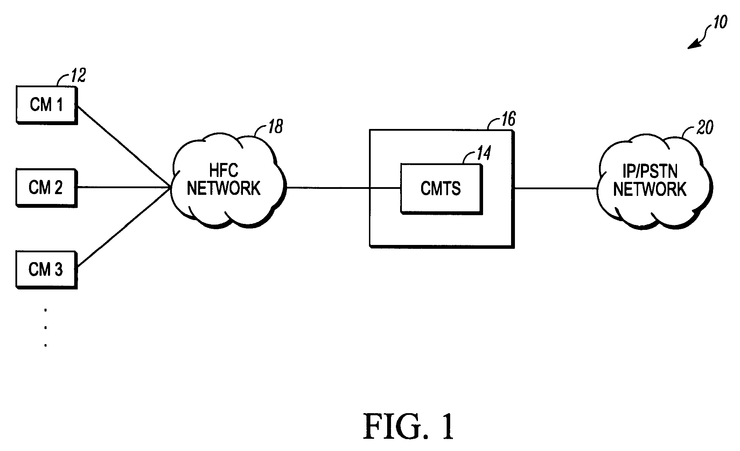

FIG. 1 illustrates an exemplary network 10 in which a plurality of cable modems 12 or like network elements are connected to a Cable Modem Termination System (CMTS) 14 at the headend 16 of the cable network 10. Each cable modem 12 may connect to the CMTS 14 through a cascade of Hybrid Fiber Coax (HFC) components including taps, passives, cabling, nodes, and Radio Frequency (RF) amplifiers indicated generally as HFC network 18 in FIG. 1. In a typical network 10, the CMTS 14 will be connected to a plurality of network taps, each of which are connected to a plurality of cable modems 12 or like network elements such that the CMTS 14 may serve and communicate with many hundreds or more of cable modems 12. In turn, each cable modem 12 may be connected to one or more customer premises equipment (CPE) (not shown), i.e., computer, router, set top box, media center, gaming console, and the like.

At the headend, the CMTS 14 may be connected to numerous program providers, television networks and stations, Internet broadcasters/service providers, and the like 20 for providing content via the CMTS 14 to the cable modems 12 and CPE. Transmission of signals from the CMTS 14 to the cable modems 12 are considered downstream transmissions and signal transmissions from the cable modems 12 to the CMTS 14, which are typically in the form of burst type transmissions, are considered upstream transmissions.

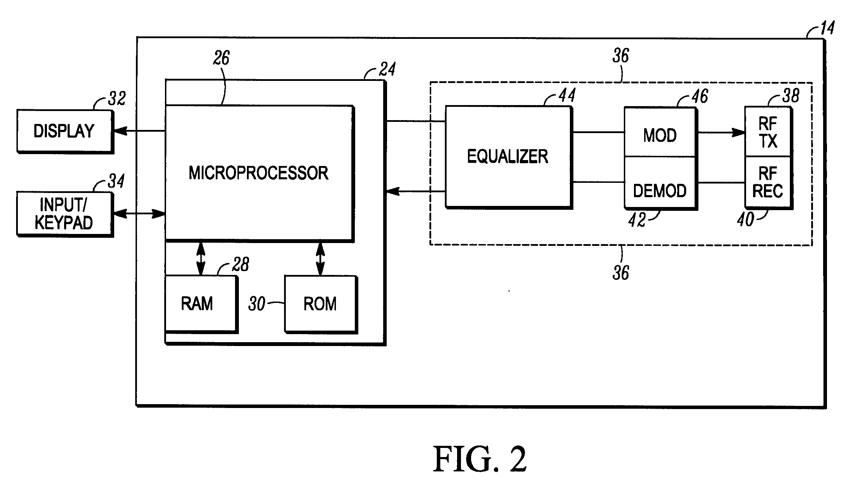

FIG. 2 illustrates an example of logical architecture of the CMTS 14 which may include a processing unit 24 having a microprocessor 26 that receives information, such as instructions and data from a RAM 28 and a ROM 30. The processing unit 24 controls the operation of the CMTS 14 and is preferably connected to a display 32 which may display status information such as station maintenance and an input keypad 34 which may permit an operator to provide commands, instructions, processing requests and/or data to processing unit 24. The CMTS 14 may further include an RF transceiver (transmitter/receiver) unit 36 having a plurality of transmitters 38 and receivers 40 providing bi-directional communication capability with a plurality of cable modems 12 or other network elements on the network 10. Each RF receiver 40 of the CMTS may provide support for a hundred or more cable modems 12 or like network elements. The RF transceiver unit 36 may include a demodulator unit 42 and an equalizer 44 to which received RF signals are provided and may also include a modulator 46 which receives downstream signals from equalizer unit 44, modulates the signals, and provides the modulated signals to RF transmitters 38.

As discussed above, when a cable modem 12 is registered with the CMTS 14, it is assigned to a load balancing group with perhaps hundreds of other cable modems. Such a group typically permits the cable modem 12 to be moved across multiple defined upstream and downstream channels. By way of example, a particular load balancing group may enable its modems to receive/transmit traffic flows on a total of four downstream channels and three or four upstream channels.

One of the functions typically performed by the CMTS 14 is to balance traffic across the multiple channels of a load balancing group. Conventionally, this may be accomplished by balancing the number of cable modems assigned to each channel (i.e., static load balancing) or by balancing and periodically re-balancing the total amount of active traffic on the channels (i.e., dynamic load balancing). For this purpose, the processing unit 24 or other processing unit of the CMTS 14 typically includes software, microprocessors, other modules, or the like for running and controlling load balancing operations.

The CMTS and its load balancing software, microprocessors, modules, or the like according to this disclosure balances traffic across channels by taking into account Quality of Service (QoS) parameters associated with the active traffic or cable modems with active traffic. Thus, candidates for load balancing are selected based on the value or values of their QoS parameter or parameters. In particular, candidates are selecting using a QoS parameter value that is generally of an inferior grade (e.g. a lower minimum reserved rate) compared to other candidates. The inferior grade candidates will have QoS requirements that are easier to satisfy when aggregated with other cable modems on a channel. An example of selecting an inferior grade QoS parameter would be to consider as candidates for moving only modems with service flows with a Minimum Reserved Rate (MRR) less than a particular threshold. Thus, during load balancing, Quality of Service parameters of active traffic are considered when selections are made by the CMTS with respect to which cable modems are to be moved from one channel to another channel within a load balancing group. More specifically, cable modems and/or active traffic that are classified as having "easier to satisfy" Quality of Service parameters are first considered to be moved across channels in an effort to re-balance load before cable modems and/or active traffic that have Quality of Service parameters that are more difficult to satisfy are considered.

By taking into account Quality of Service parameters during load balancing and not just the total number of cable modems per channel or amount of active traffic per channel, interruptions for customers subscribed to premium services with higher levels or grades of Quality of Service are reduced due to the reduced DOCSIS Upstream Channel Change (UCC) and DOCSIS Dynamic Channel Change (DCC) operations applied to these cable modems during load balancing events. In addition, the probability of realizing relatively-inactive future service flows on a channel or channels with relatively-high Quality of Service demands will necessarily be maximized better ensuring that the guaranteed Quality of Service levels are provided to the subscriber/customer.

For purposes of this disclosure, a service flow is a unidirectional flow of packets that provides a particular Quality of Service (QoS). The DOCSIS protocol classifies traffic into service flows with each service flow having its own set of QoS parameters. For example, DOCSIS service flow types for upstream service flows (from cable modem to CMTS) may include: a best effort service flow type; a non-real-time polling service (NRTPS) flow type; a real-time polling service (RTPS) flow type; an unsolicited grant service (UGS) flow type; and an unsolicited grant service with activity detection (UGS-AD) flow type. Simply for purposes of example, a best effort service flow type may be standard internet traffic such as web browsing, email, or instant messaging. An example of a NRTPS flow type may be standard Internet traffic that requires high throughput or variable-size data grants on a regular basis. An example of a RTPS flow type may be MPEG video, and an example of an UGS flow type may be VoIP.

DOCSIS defines QoS parameters for each of the above service flow types. By way of example, the QoS parameters for a best effort service flow type include traffic priority, request transmission policy, maximum sustained traffic rate, maximum traffic burst, minimum reserved traffic rate, and assumed minimum reserved-traffic-rate packet size. The QoS parameters for a NRTPS flow type include traffic priority, request transmission policy, maximum sustained traffic rate, maximum traffic burst, minimum reserved traffic rate, assumed minimum reserved-traffic-rate packet size, and nominal polling interval. The QoS parameters for a RTPS flow type include request transmission policy, maximum sustained traffic rate, maximum traffic burst, minimum reserved traffic rate, assumed minimum reserved-traffic-rate packet size, nominal polling interval, and tolerated poll jitter. The QoS parameters for an UGS flow type include request transmission policy, unsolicited grant size, grants per interval, nominal grant interval, and tolerated grant jitter. The QoS parameters for an UGS-AD flow type include request transmission policy, nominal polling interval, tolerated poll jitter, unsolicited grant size, grants per interval, nominal grant interval, and tolerated grant jitter.

According to the above recited definitions or other definitions, an algorithm set to run on the processing unit 24 or like unit on the CMTS 14 can be pre-set with one or more defined thresholds relative to one or more Quality of Service parameters that can be used to distinguish a cable modem and/or traffic type or a set of cable modems and/or traffic types that have so-called "easier to satisfy" Quality of Service parameters than another cable modem or set of cable modems within a load balancing group of cable modems. Thereafter, during the selection process performed by the CMTS 14 to identify cable modems to be moved from a first channel to a second channel, cable modems pre-selected as having active traffic with easier to satisfy Quality of Service parameters are first considered for being moved during a load balancing procedure. Only if rebalancing cannot be fully achieved solely with movement of cable modems considered as having easier to satisfy Quality of Service parameters are cable modems from the remaining cable modems of the load balancing group considered for selection for movement to re-balance load across the channels. If this occurs, a cable modem having active traffic with the easiest to satisfy Quality of Service parameters remaining is selected before a cable modem having relatively harder Quality of Service parameters is selected. The selection process is performed in iterations until the desired or pre-set level of re-balancing is achieved.

QoS parameters may also be considered when determining the number of times a cable modem can be moved to a different channel within a load balancing group during consecutive load balancing events. For example, dynamic load balancing may occur at intervals of about every five minutes, and any single cable modem may be limited from being moved repeatedly back-and forth between channels in a ping-pong manner during a given number of consecutive load balancing events. Here, a cable modem identified as having so-called easier to satisfy QoS parameters may be permitted to be moved up to five times during consecutive load balancing events; whereas, a cable modem considered as having harder to satisfy QoS parameters may only be permitted to be moved two times during consecutive load balancing events. Thus, after being moved in two consecutive load balancing operations, the cable modem is then prevented from being moved when the next load balancing operation occurs.

As discussed above, one of the steps of the load balancing method is to distinguish cable modems having service flows with so-called easier to satisfy Quality of Service parameters from cable modems having service flows with relatively harder to satisfy Quality of Service parameters. These decisions can be implemented by providing algorithms applied by the CMTS 14 defined by one or more set of rules for use in making load balancing selections. For example, a cable modem that does not have an eMTA may be placed in a list of cable modems identified as having easier to satisfy Quality of Service parameters as compared to a cable modem having an eMTA. This is because the eMTA is used for streaming voice or video communications, such as required for providing VoIP communicating services. This type of service flow generally has harder to satisfy Quality of Service parameters. Thus, cable modems without an eMTA may be considered for being moved to a different channel during load balancing operations before cable modems having eMTAs.

Of course, there are many other examples of rules for distinguishing cable modems having service flows with easier to satisfy Quality of Service parameters from other cable modems within a load balancing group. For instance, cable modems having service flows with fewer distinct Service Class Names or types will have QoS parameters that are easier to satisfy than a cable modem having service flows with more distinct Service Class Names or types, and cable modems having service flows with a lower total sum of Minimum Reserved Rate (MRR) will have QoS parameters that are easier to satisfy than a cable modem having service flows with a higher total sum of MRR.

The algorithms applied by the CMTS 14 can focus on each active service flow of a cable modem to select modems for movement across channels during load balancing. Here, a cable modem can be selected as having QoS parameters easier to satisfy than another cable modem based on each of its service flows being relatively easier to satisfy than the service flows of another modem. For example, a service flow that is without a defined MRR has QoS parameters that are easier to satisfy than a service flow with a defined MRR. Likewise, a service flow with a lower MRR has QoS parameters that are easier to satisfy than a service flow with a higher MRR. Also by way of example, a service flow that is without a defined jitter tolerance has QoS parameters that are easier to satisfy than a service flow with a defined jitter tolerance, and a service flow with a higher jitter tolerance has QoS parameters that are easier to satisfy than a service flow with a lower jitter tolerance.

As additional examples, a service flow that is without a defined maximum traffic rate has QoS parameters that are easier to satisfy than a service flow with a defined maximum traffic rate, and a service flow with a lower maximum traffic rate has QoS parameters that are easier to satisfy than a service flow with a higher maximum traffic rate. Still further, a service flow with a smaller total maximum traffic burst has QoS parameters that are easier to satisfy than a service flow with a higher total maximum traffic burst; a service flow with fewer Unsolicited Grant Service (UGS) grants per interval has QoS parameters that are easier to satisfy than a service flow with more UGS grants per interval; and a service flow with a smaller UGS grant interval has QoS parameters that are easier to satisfy than a service flow with a larger UGS grants interval. Of course, these provide just a few examples.

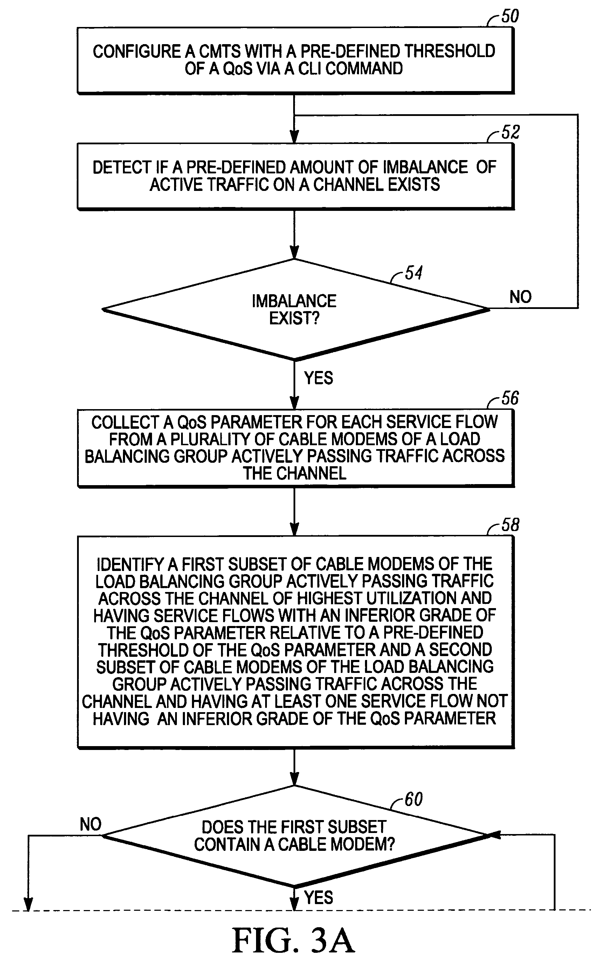

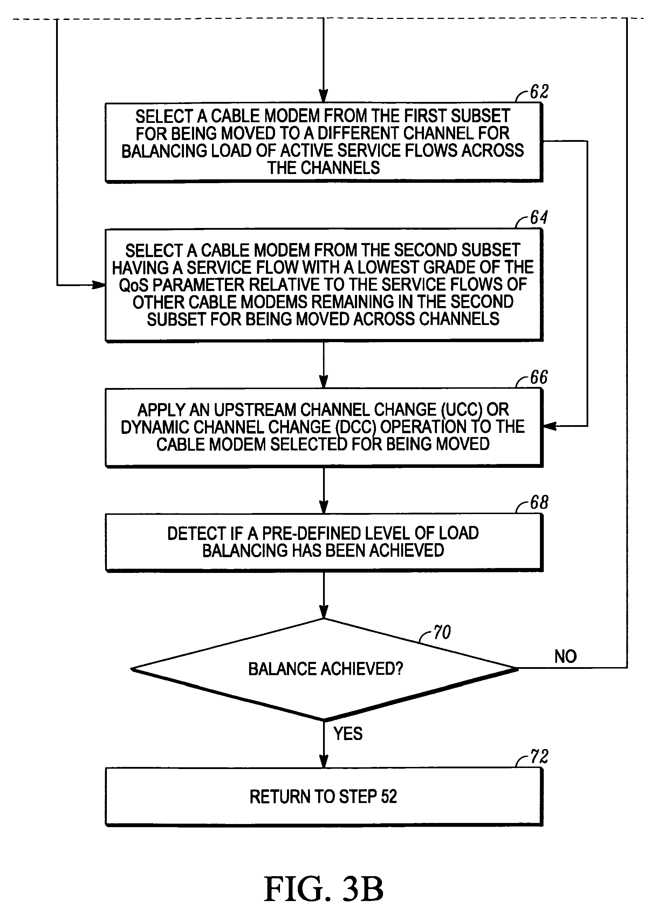

A method for considering QoS parameters during load balancing is shown in the flowchart of FIG. 3 and can include the following steps. A series of thresholds distinguishing between QoS parameters that are considered easier to satisfy from those considered more difficult to satisfy are defined and are entered into the algorithms run by the processing unit 24 of the CMTS 14 via use of Command Line Interface (CLI) commands entered by an operator via input keypad 34. (See step 50.) As an example of a threshold, a value of "x" can be entered as a threshold for the QoS parameter Minimum Reserved Rate (MRR). If the active traffic of a cable modem is of a service flow type of best effort, NRTPS or RTPS and has a MRR QoS parameter of a value that is equal to or less than "x", then the cable modem can be considered as having easier to satisfy QoS parameters and can be considered a proper candidate for being moved from a channel with highest utilization to another channel during load balancing. Alternatively, if the above referenced value is greater than "x", the cable modem should only be considered for being moved to another channel after all other modems having easier to satisfy QoS parameters are first considered and moved.

At runtime of the load balancing algorithm, the CMTS 14 detects whether or not a pre-defined amount of imbalance exists on a channel of highest utilization. (See step 52). If not, the CMTS 14 continues to detect for imbalances or checks for imbalances at a next pre-defined interval. (See step 54). However, if a pre-defined imbalance exists, the CMTS begins selecting cable modems for UCC or DCC for purposes of re-balancing the load across the channels of the load balancing group. Thus, the CMTS begins collecting a pre-defined QoS parameter for each service flow of cable modems actively passing traffic across the channel of highest utilization. (See step 56.)

According to one embodiment, a "First List" is defined as including all the cable modems assign to pass traffic across a particular channel. From this "First List", cable modems that provide a Quality of Service that is better or superior to the pre-set thresholds for QoS parameters are removed from the "First List" and placed in a "Second List" or second subset. In this manner, only cable modems that do not meet the quality thresholds and/or are considered as having inferior grades of service with "easier to satisfy" QoS parameters remain in the "First List", or first subset for being considered as a candidate to be moved across channels in a load balancing effort. (See step 58.)

For purposes of example, the "Second List" can be compiled as follows. For each cable modem in the "First List": (a) identify the cable modem's active service flow identifiers (SFIDs) on which there is active traffic; (b) for each such SFID, obtain the service flow attributes (i.e., QoS parameters and values thereof); and (c) if the service flow attributes of any of the SFIDs of the cable modem are of a quality that surpass the thresholds as defined by the rules stored in the algorithm of the CMTS, then move the cable modem to the "Second List", if not, permit the cable modem to remain in the "First List".

After the First and Second Lists are compiled, an attempt is made to achieve a pre-defined level of load balancing by applying UCC and/or DCC operations to at least some or possible all of the cable modems listed in the "First List" (i.e., list of cable modems considered to have easier to satisfy QoS parameters). (See steps 62 and 66.) If the pre-defined level of re-balancing has been achieved (see steps 68 and 70), the current load balancing operation can be terminated and the process can return to detecting for imbalance (see steps 72 and 52). Alternatively, if after all cable modems in the "First List" have been moved across channels (see step 60) and the pre-defined level of re-balancing has not be achieved (see steps 68 and 70), a needed number of the cable modems in the "Second List" are moved to another channel (see steps 64 and 66) until the pre-defined level of re-balancing has been achieved. Here, a cable modem in the "Second List" that has the easiest to satisfy QoS parameter of all the remaining cable modems in the "Second List" is the first to be moved. This process continues with the remaining cable modems in the "Second List" until the pre-defined level of re-balancing is achieved.

The above described "QoS-aware" load balancing algorithm can be run in conjunction with other algorithms and rules set for the CMTS. For instance, algorithms defining the threshold for when the next load balancing operation begins or ends, how many consecutive movements of a cable modem is permitted before the cable modem is not permitted to be moved, or which cable modems are always prevented from being moved can be used in conjunction with the "QoS-aware" load balancing algorithm. Further, the "QoS-aware" load balancing algorithm can be applied to all cable modems on all channels or only certain pre-defined cable modems or pre-defined channels.

A specific example is provided below. In this example, there are two rules by which the load balancing algorithm makes decisions. "Rule 1" requires that a dynamic load balancing operation be started if the utilization of an upstream channel in the load balancing group equals or surpasses 80%. "Rule 2" requires that for any cable modem having an active service flow with a minimum reserved traffic rate QoS parameter of greater than 600,000, the cable modem should be moved to "List 2" which represents a list of cable modems that do not have so-called "easier to satisfy" QoS parameters.

In this example, cable modem 1 (CM1) is configured with a service class having a minimum reserved traffic rate of 800,000; cable modem 2 (CM2) is configured with a service class having a minimum reserved traffic rate of 700,000; and cable modem 3 (CM3) is configured with a service class having a minimum reserved traffic rate of 500,000. In this example, all cable modems (CM1, CM2, CM3) are actively passing traffic on the same upstream channel and the utilization on this upstream channel crosses 80%. This initiates a load balancing operation to be performed by the CMTS according to the requirement of "Rule 1". A "List 1" is generated in which CM1, CM2 and CM3 are identified. The algorithm selects CM1 and CM2 to be removed from "List 1" and placed in "List 2" according to the requirements of "Rule 2". Since "List 1" now represents cable modems considered to have "easier to satisfy" QoS parameters, CM3 is selected for UCC and gets moved to a different (less utilized) channel in the load balancing group in an effort to balance load across the channels of the load balancing group. If the utilization of the upstream channel on which CM1 and CM2 remain falls below 80%, the load balancing operation concludes. Otherwise, if utilization on the channel remains at or above 80% after moving CM3 and "List1" is empty, cable modems from "List 2" are now considered for load re-balancing. Here, the algorithm selects CM2 for being moved to a less utilized channel because the MRR for CM2 is less than (i.e., easier to satisfy) the MRR for CM 1. Thus, CM2 is moved.

The devices, units, modules and storage discussed above can physically be provided on a circuit board or within an electronic device and can include various processors, microprocessors, controllers, chips, disk drives, and the like. It will be apparent to one of ordinary skill in the art that the modules, processors, controllers, units, and the like may be implemented as electronic components, software, hardware or a combination of hardware and software. For example, a means to perform the above discussed algorithm can be provided as at least one computer readable storage medium having computer program instructions stored thereon that are arranged to perform the above referenced operations.

While the principles of the invention have been described above in connection with specific devices, systems, and methods, it is to be clearly understood that this description is made only by way of example and not as limitation on the scope of the invention as defined in the appended claims.

## Claims

1. A method of load balancing cable modems across channels of a load balancing group on a Data Over Cable System Interface Specification (DOCSIS) network (10), comprising the steps of:
collecting, by one or more processors (26), at least one Quality of Service (QoS) parameter for each service flow from a plurality of cable modems (12) actively passing traffic across one channel of the load balancing group;
using the at least one QoS parameter collected during said collecting step for each service flow to identify, by the one or more processors (26), whether at least one cable modem (12) has a service flow with an inferior grade of the at least one QoS parameter relative to a pre-defined threshold, wherein a first subset of cable modems (12) of the load balancing group actively passing traffic across the one channel and having service flows with the inferior grade of the at least one QoS parameter is identified from a second subset of cable modems (12) of the load balancing group actively passing traffic across the one channel and having service flows not having the inferior grade of the at least one QoS parameter; and
selecting, by the one or more processors (26), one or more cable modems (12) for being moved from the one channel of the load balancing group to a different channel of the load balancing group for balancing load of active service flows across the channels of the load balancing group, wherein the cable modems (12) from the second subset of cable modems are not considered for being selected for being moved from the one channel unless all cable modems in the first subset of cable modems (12) have been moved and further load balancing is to be performed.

2. A method according to claim 1, wherein the pre-defined threshold defines a grade of service threshold for the at least one QoS parameter, and wherein the at least one QoS parameter is selected from a group consisting of minimum reserved traffic rate, jitter tolerance, maximum sustained traffic rate, total maximum traffic burst, unsolicited grant service (UGS) grants per interval, UGS grant interval, traffic priority, request transmission policy, assumed minimum reserved-traffic-rate packet size, nominal polling interval, and unsolicited grant size.

3. A method according to claim 1, wherein during said selecting step, if all the cable modems (12) in the first subset of cable modems have been moved and further load balancing is required, a cable modem (12) from the second subset of cable modems having a service flow with a lowest grade of the at least one QoS parameter relative to the service flows of other cable modems (12) remaining in the second subset is selected for being moved from the one channel for balancing load.

4. A method according to claim 1, further comprising the step of configuring the one or more processors with the pre-defined threshold of the at least one QoS parameter via user interface before said collecting, using and selecting steps.

5. A method according to claim 1, further comprising the step of applying at least one of an upstream channel change (UCC) operation and a dynamic channel change (DCC) operation to the at least one cable modem (12) selected during said selecting step.

6. A method according to claim 5, further comprising the step of detecting if a pre-defmed level of load balancing has been achieved after said applying step, wherein if the pre-defined level of load balancing has not yet been achieved, said using, selecting and applying steps are repeated for cable modems (12) remaining on the one channel, and wherein if the pre-defined level of load balancing has been achieved, load balancing is terminated until a later imbalance is detected.

7. A method according to claim 1, further comprising the step of detecting if a pre-defined amount of imbalance of active traffic on the channels of the load balancing group exists, wherein if the pre-defined amount of imbalance is detected, a load balancing operation is initiated by proceeding with said collecting step.

8. A method according to claim 1, wherein the one or more processors are part of a Cable Modem Termination System (CMTS) (14).

9. A signal processing electronic device for communicating with cable modems across channels of a load balancing group on a Data Over Cable System Interface Specification (DOCSIS) network (10), comprising:
a processing unit (24) configurable to run an algorithm for performing a load balancing operation for the cable modems (12) across the channels of the load balancing group;
said processing unit (24) being configured to collect at least one Quality of Service (QoS) parameter for each service flow from the cable modems (12) that are actively passing traffic across one channel of the load balancing group;
said processing unit (24) being configured to identify whether at least one cable modem (12) has a service flow with an inferior grade of the at least one QoS parameter relative to a pre-defined threshold, wherein a first subset of cable modems (12) of the load balancing group actively passing traffic across the one channel and having service flows with the inferior grade of the at least one QoS parameter is identified from a second subset of cable modems (12) of the load balancing group actively passing traffic across the one channel and having service flows not having the inferior grade of the at least one QoS parameter; and
said processing unit being configured to select the at least one cable modem (12) for being moved from the one channel to a different channel of the load balancing group for balancing load of active service flows across the channels of the load balancing group, wherein the cable modems (12) from the second subset of cable modems are not considered for being selected for being moved from the one channel unless all cable modems in the first subset of cable modems (12) have been moved and further load balancing is to be performed.

10. A signal processing electronic device according to claim 9, wherein the signal processing electronic device is a Cable Modem Termination System (CMTS) (14).

11. A signal processing electronic device according to claim 9, further comprising a transceiver unit (36) connected to said processing unit for transmitting and receiving communication signals to and from the cable modems (12) across the channels of the load balancing group.

12. A signal processing electronic device according to claim 9, wherein said processing unit includes at least one microprocessor (26) for controlling the load balancing operation.

13. A signal processing electronic device according to claim 9, wherein the pre-defined threshold defines a grade of service threshold for the at least one QoS parameter, and wherein the at least one QoS parameter is selected from a group consisting of minimum reserved traffic rate, jitter tolerance, maximum sustained traffic rate, total maximum traffic burst, unsolicited grant service (UGS) grants per interval, and UGS grant interval, traffic priority, request transmission policy, assumed minimum reserved-traffic-rate packet size, nominal polling interval, and unsolicited grant size.

14. A signal processing electronic device according to claim 9, wherein, if all the cable modems in the first subset have been moved and further load balancing is required, said processing unit is configured to select a cable modem from the second subset having a service flow with a lowest grade of the at least one QoS parameter relative to the service flows of other cable modems remaining in the second subset for being moved from the one channel for balancing load of active service flows across the channels of the load balancing group.

15. A signal processing electronic device according to claim 9, wherein the processing unit is configured to apply at least one of an upstream channel change (UCC) operation and a dynamic channel change (DCC) operation to the at least one cable modem selected for being moved.

16. At least one non-transitory computer readable storage medium having computer program instructions stored thereon that are arranged to perform the following operations:
collecting at least one Quality of Service (QoS) parameter for each service flow from cable modems of a load balancing group actively passing traffic across one channel of a pre-defined set of channels of the load balancing group;
using the at least one QoS parameter collected during said collecting step for each service flow to identify whether at least one cable modem has a service flow with an inferior grade of the at least one QoS parameter relative to a pre-defined threshold, wherein a first subset of cable modems (12) of the load balancing group actively passing traffic across the one channel and having service flows with the inferior grade of the at least one QoS parameter is identified from a second subset of cable modems (12) of the load balancing group actively passing traffic across the one channel and having service flows not having the inferior grade of the at least one QoS parameter; and
selecting at least one cable modem for being moved from the one channel to a different channel of the load balancing group for balancing load of active service flows across the pre-defined set of channels of the load balancing group, wherein the cable modems (12) from the second subset of cable modems are not considered for being selected for being moved from the one channel unless all cable modems in the first subset of cable modems (12) have been moved and further load balancing is to be performed.

## Patentansprüche

1. Verfahren zum Ausgleichen von Last von Kabelmodems über Kanäle einer Lastausgleichsgruppe bei einem Data Over Cable System Interface Specification- (DOCSIS) -Netzwerk (10), das die Schritte umfasst:
Erfassen von mindestens einem Dienstgüte- (QoS) -Parameter für jeden Dienstfluss von mehreren Kabelmodems (12), die Verkehr über einen Kanal der Lastausgleichsgruppe aktiv weitergeben, durch einen oder mehrere Prozessoren (26);
Verwenden des mindestens einen QoS-Parameters, der während des Erfassungsschritts für jeden Dienstfluss erfasst wurde, um mittels dem einen oder den mehreren Prozessoren (26) zu identifizieren, ob mindestens ein Kabelmodem (12) einen Dienstfluss mit einer geringeren Güte des mindestens einen QoS-Parameters relativ zu einem vordefinierten Schwellenwert aufweist, wobei eine erste Untergruppe von Kabelmodems (12) der Lastausgleichsgruppe, die aktiv Verkehr über den einen Kanal weitergibt und Dienstflüsse mit der geringeren Güte des mindestens einen QoS-Parameters aufweist, von einer zweiten Untergruppe von Kabelmodems (12) der Lastausgleichsgruppe identifiziert wird, die aktiv Verkehr über den einen Kanal weitergibt und Dienstflüsse aufweist, die nicht die geringere Güte des mindestens einen QoS-Parameters aufweisen; und
Auswählen von einem oder mehreren Kabelmodems (12), die von einem Kanal der Lastausgleichsgruppe zu einem unterschiedlichen Kanal der Lastausgleichsgruppe zum Ausgleichen von Last von aktiven Dienstflüssen über die Kanäle der Lastausgleichsgruppe verschoben werden, durch den einen oder die mehreren Prozessoren (26), wobei die Kabelmodems (12) von der zweiten Untergruppe von Kabelmodems nicht berücksichtigt sind, ausgewählt zu werden, von dem einen Kanal verschoben zu werden, es sei denn, dass alle Kabelmodems in der ersten Untergruppe von Kabelmodems (12) verschoben wurden und weiterer Lastausgleich auszuführen ist.

2. Verfahren nach Anspruch 1, wobei der vordefinierte Schwellenwert einen Dienstgüteschwellenwert für den mindestens einen QoS-Parameter definiert, und wobei der mindestens eine QoS-Parameter aus einer Gruppe ausgewählt wird, die aus minimaler reservierter Verkehrsmenge, Jittertoleranz, maximaler anhaltender Verkehrsmenge, gesamtem maximalem Verkehrsburst, Unsolicited Grant Service-(UGS) -Grants pro Intervall, UGS-Grant-Intervall, Verkehrspriorität, Übertragungsanforderungsrichtlinie, angenommener minimaler reservierter Verkehrsmengen-Paketgröße, nominalem Abfrageintervall und Unsolicited Grant-Größe besteht.

3. Verfahren nach Anspruch 1, wobei während des Auswählschritts, wenn alle Kabelmodems (12) in der ersten Untergruppe von Kabelmodems verschoben wurden und weiterer Lastausgleich erforderlich ist, ein Kabelmodem (12) von der zweiten Untergruppe von Kabelmodems mit einem Dienstfluss mit einer niedrigsten Güte von dem mindestens einen QoS-Parameter relativ zu den Dienstflüssen anderer Kabelmodems (12), die in der zweiten Untergruppe verbleiben, zum Verschieben von dem einen Kanal zum Ausgleichen der Last ausgewählt wird.

4. Verfahren nach Anspruch 1, weiter umfassend der Schritt des Konfigurierens von dem einen oder den mehreren Prozessoren mit dem vordefinierten Schwellenwert des mindestens einen QoS-Parameters über eine Benutzeroberfläche vor den Erfassungs-, Verwendungs- und Auswählschritten.

5. Verfahren nach Anspruch 1, weiter umfassend den Schritt des Anwendens von mindestens einer von einer Upstreamkanalwechsel- (UCC) -Operation und einer dynamischen Kanalwechsel- (DCC) -Operation auf das mindestens eine Kabelmodem (12), das während des Auswählschritts ausgewählt wurde.

6. Verfahren nach Anspruch 5, weiter umfassend den Schritt des Detektierens, ob ein vordefiniertes Lastausgleichsniveau nach dem Anwendungsschritt erreicht wurde, wobei, wenn das vordefinierte Lastausgleichsniveau noch nicht erreicht wurde, die Verwendungs-, Auswähl- und Anwendungsschritte für Kabelmodems (12), die auf dem einen Kanal verbleiben, wiederholt werden, und wobei, wenn das vordefinierte Lastausgleichsniveau erreicht wurde, der Lastausgleich beendet wird, bis eine spätere Unausgeglichenheit detektiert wird.

7. Verfahren nach Anspruch 1, weiter umfassend den Schritt des Detektierens, ob ein vordefinierter Unausgeglichenheitsbetrag des aktiven Verkehrs auf den Kanälen der Lastausgleichsgruppe existiert, wobei, wenn der vordefinierte Unausgeglichenheitsbetrag detektiert wird, eine Lastausgleichsoperation durch Fortschreiten mit dem Erfassungsschritt initiiert wird.

8. Verfahren nach Anspruch 1, wobei der eine oder die mehreren Prozessoren Teil eines Kabelmodemendsystems (CMTS) (14) sind.

9. Elektronische Signalverabeitungsvorrichtung zum Kommunizieren mit Kabelmodems über Kanäle einer Lastausgleichsgruppe bei einem Data Over Cable System Interface Specification- (DOCSIS) -Netzwerk (10), umfassend:
eine Verarbeitungseinheit (24), die konfigurierbar ist, einen Algorithmus zum Ausführen einer Lastausgleichsoperation für die Kabelmodems (12) über die Kanäle der Lastausgleichsgruppe auszuführen;
wobei die Verarbeitungseinheit (24) konfiguriert ist, mindestens einen Dienstgüte- (QoS) -Parameter für jeden Dienstfluss von den Kabelmodems (12) zu erfassen, die aktiv Verkehr über einen Kanal der Lastausgleichsgruppe weitergeben;
wobei die Verarbeitungseinheit (24) konfiguriert ist, zu identifizieren, ob mindestens ein Kabelmodem (12) einen Dienstfluss mit einer geringeren Güte des mindestens eines QoS-Parameters relativ zu einem vordefinierten Schwellenwert aufweist, wobei eine erste Untergruppe von Kabelmodems (12) der Lastausgleichsgruppe, die aktiv Verkehr über den einen Kanal weitergibt und Dienstflüsse mit der geringeren Güte des mindestens einen QoS-Parameters aufweist, von einer zweiten Untergruppe von Kabelmodems (12) der Lastausgleichsgruppe identifiziert wird, die aktiv Verkehr über den einen Kanal weitergibt und Dienstflüsse aufweist, die nicht die geringere Güte des mindestens einen QoS-Parameters aufweisen; und
wobei die Verarbeitungseinheit konfiguriert ist, das mindestens eine Kabelmodem (12) zum Verschieben von dem einen Kanal zu einem unterschiedlichen Kanal der Lastausgleichsgruppe zum Ausgleichen der Last von aktiven Dienstflüssen über die Kanäle der Lastausgleichsgruppe auszuwählen, wobei die Kabelmodems (12) von der zweiten Untergruppe von Kabelmodems nicht berücksichtigt sind, ausgewählt zu werden, von dem einen Kanal verschoben zu werden, es sei denn, dass alle Kabelmodems in der ersten Untergruppe von Kabelmodems (12) verschoben wurden und weiterer Lastausgleich auszuführen ist.

10. Elektronische Signalverarbeitungsvorrichtung nach Anspruch 9, wobei die elektronische Signalverarbeitungsvorrichtung ein Kabelmodemendsystem (CMTS) (14) ist.

11. Elektronische Signalverarbeitungsvorrichtung nach Anspruch 9, weiter umfassend eine Transceivereinheit (36), die mit der Verarbeitungseinheit zum Senden und Empfangen von Kommunikationssignalen zu und von den Kabelmodems (12) über die Kanäle der Lastausgleichsgruppe verbunden ist.

12. Elektronische Signalverarbeitungsvorrichtung nach Anspruch 9, wobei die Verarbeitungseinheit mindestens einen Mikroprozessor (26) zum Steuern der Lastausgleichsoperation umfasst.

13. Elektronische Signalverarbeitungsvorrichtung nach Anspruch 9, wobei der vordefinierten Schwellenwert einen Dienstgüteschwellenwert für den mindestens einen QoS-Parameter definiert, und wobei der mindestens eine QoS-Parameter aus einer Gruppe ausgewählt ist, die aus minimaler reservierter Verkehrsmenge, Jittertoleranz, maximaler anhaltender Verkehrsmenge, gesamtem maximalem Verkehrsburst, Unsolicited Grant Service- (UGS) -Grants pro Intervall, UGS-Grant-Intervall, Verkehrspriorität, Übertragungsanforderungsrichtlinie, angenommener minimaler reservierter Verkehrsmengen-Paketgröße, nominalem Abfrageintervall und Unsolicited Grant-Größe besteht.

14. Elektronische Signalverarbeitungsvorrichtung nach Anspruch 9, wobei, wenn alle Kabelmodems in der ersten Untergruppe verschoben wurden und weiterer Lastausgleich erforderlich ist, die Verarbeitungseinheit konfiguriert ist, ein Kabelmodem von der zweiten Untergruppe mit einem Dienstfluss mit einer niedrigsten Güte von dem mindestens einen QoS-Parameter relativ zu den Dienstflüssen anderer Kabelmodems, die in der zweiten Untergruppe zum Verschieben von dem einen Kanal zum Ausgleichen von Last von aktiven Dienstflüssen über die Kanäle der Lastausgleichsgruppe verbleiben, auszuwählen.

15. Elektronische Signalverarbeitungsvorrichtung nach Anspruch 9, wobei die Verarbeitungseinheit konfiguriert ist, mindestens eine von einer Upstreamkanalwechsel- (UCC) - Operation und einer dynamischen Kanalwechsel- (DCC) - Operation auf das mindestens eine Kabelmodem anzuwenden, das zum Verschieben ausgewählt ist.

16. Mindestens ein nicht flüchtiges computerlesbares Speichermedium mit darauf gespeicherten Computerprogrammbefehlen, die eingerichtet sind, die folgenden Operationen auszuführen:
Erfassen von mindestens einem Dienstgüte- (QoS) -Parameter für jeden Dienstfluss von Kabelmodems einer Lastausgleichsgruppe, die aktiv Verkehr über einen Kanal eines vordefinierten Satzes von Kanälen der Lastausgleichsgruppe weitergeben;
Verwenden des mindestens einen QoS-Parameters, der während des Erfassungsschritts für jeden Dienstfluss erfasst wurde, um zu identifizieren, ob mindestens ein Kabelmodem einen Dienstfluss mit einer geringeren Güte des mindestens eines QoS-Parameters relativ zu einem vordefinierten Schwellenwert aufweist, wobei eine erste Untergruppe von Kabelmodems (12) der Lastausgleichsgruppe, die aktiv Verkehr über den einen Kanal weitergibt und Dienstflüsse mit der geringeren Güte des mindestens einen QoS-Parameters aufweist, von einer zweiten Untergruppe von Kabelmodems (12) der Lastausgleichsgruppe identifiziert wird, die aktiv Verkehr über den einen Kanal weitergibt und Dienstflüsse aufweist, die nicht die geringere Güte des mindestens einen QoS-Parameters aufweisen; und
Auswählen von mindestens einem Kabelmodem, das von einem Kanal zu einem unterschiedlichen Kanal der Lastausgleichsgruppe zum Ausgleichen der Last von aktiven Dienstflüssen über den vordefinierten Satz von Kanälen der Lastausgleichsgruppe zu verschieben ist, wobei die Kabelmodems (12) von der zweiten Untergruppe von Kabelmodems nicht berücksichtigt sind, ausgewählt zu werden, von dem einen Kanal verschoben zu werden, es sei denn, dass alle Kabelmodems in der ersten Untergruppe von Kabelmodems (12) verschoben wurden und weiterer Lastausgleich auszuführen ist.

## Revendications

1. Procédé d'équilibrage de charge de modems câbles à travers des canaux d'un groupe d'équilibrage de charge sur un réseau de Spécification du Système d'interface de Données sur le Câble (DOCSIS) (10), comprenant les étapes :
de collecte, par un ou plusieurs processeurs (26), d'au moins un paramètre de qualité de service (QoS) pour chaque flux de service d'une pluralité de modems câbles (12) passant activement du trafic à travers un canal du groupe d'équilibrage de charge ;
d'utilisation de l'au moins un paramètre QoS collecté durant ladite étape de collecte pour chaque flux de service pour identifier, par l'un ou plusieurs processeurs (26), si au moins un modem câble (12) a un flux de service avec une qualité inférieure de l'au moins un paramètre QoS par rapport à un seuil prédéfini, où un premier sous-ensemble de modems câbles (12) du groupe d'équilibrage de charge passant activement du trafic à travers ce canal donné et ayant des flux de service avec une qualité inférieure de l'au moins un paramètre QoS est identifié à partir d'un second sous-ensemble de modems câbles (12) du groupe d'équilibrage de charge passant activement du trafic à travers ce canal donné et ayant des flux de service n'ayant pas une qualité inférieure de l'au moins un paramètre QoS ; et
de sélection, par l'un ou plusieurs processeurs (26), d'un ou plusieurs modems câbles (12) pour être déplacés de ce canal donné du groupe d'équilibrage de charge à un canal différent du groupe d'équilibrage de charge pour l'équilibrage de charge de flux de service actif à travers des canaux du groupe d'équilibrage de charge, où les modems câbles (12) du second sous-ensemble de modems câbles ne sont pas considérés pour être sélectionnés afin d'être déplacés de ce canal donné à moins que tous les modems câbles dans le premier sous-ensemble de modems câbles (12) aient été déplacés et qu'un équilibrage de charge supplémentaire doive être réalisé.

2. Procédé selon la revendication 1, dans lequel le seuil prédéfini définit un seuil de qualité de service pour l'au moins un paramètre QoS, et dans lequel l'au moins un paramètre QoS est choisi dans un groupe constitué d'un débit minimal de trafic réservé, d'une tolérance de gigue, d'un débit maximal de trafic soutenu, d'une rafale de trafic maximale totale, des attributions de services d'attribution non sollicitée (UGS) par intervalle, d'un intervalle d'attribution UGS, d'une priorité de trafic, d'une politique de transmission de demande, d'une taille de paquet minimale supposée du débit de trafic réservé, d'un intervalle de sondage nominal, et d'une taille d'attribution non sollicitée.

3. Procédé selon la revendication 1, dans lequel, durant ladite étape de sélection, si tous les modems câbles (12) dans le premier sous-ensemble de modems câbles ont été déplacés et si un équilibrage de charge supplémentaire est requis, un modem câble (12) du second sous-ensemble de modems câbles ayant un flux de service avec une qualité la plus basse de l'au moins un paramètre QoS par rapport aux flux de service d'autres modems câbles (12) restants dans le second sous-ensemble est sélectionné pour être déplacé depuis le premier canal pour un équilibrage de charge.

4. Procédé selon la revendication 1, comprenant en outre l'étape de configuration de l'un ou de plusieurs processeurs avec le seuil prédéfini de l'au moins un paramètre QoS par le biais d'une interface utilisateur avant les dédites étapes de collecte, d'utilisation et de sélection.

5. Procédé selon la revendication 1, comprenant en outre l'étape d'application d'au moins une opération parmi une opération de changement de canal en amont (UCC) et une opération de changement de canal dynamique (DCC) à l'au moins un modem câble (12) sélectionné durant ladite étape de sélection.

6. Procédé selon la revendication 5, comprenant en outre l'étape de détection si un niveau prédéfini d'équilibrage de charge a été atteint après ladite étape d'application, où, si le niveau prédéfini d'équilibrage de charge n'a pas encore été atteint, lesdites étapes d'utilisation, de sélection et d'application sont répétées pour les modems câbles (12) restants dans le canal donné, et où, si le niveau prédéfini d'équilibrage de charge a été atteint, l'équilibrage de charge est terminé jusqu'à ce qu'un déséquilibre ultérieur soit détecté.

7. Procédé selon la revendication 1, comprenant en outre l'étape de détection si une quantité prédéfinie de déséquilibre de trafic actif dans les canaux du groupe d'équilibrage de charge existe, où si la quantité de déséquilibre prédéfinie est détectée, une opération d'équilibrage de charge est initiée en procédant avec ladite étape de collecte.

8. Procédé selon la revendication 1, dans lequel l'un ou plusieurs processeurs font partie d'un système de terminaison par modem câble (CMTS) (14).

9. Dispositif électronique de traitement de signaux pour la communication avec des modems câbles à travers des canaux d'un groupe d'équilibrage de charge sur un réseau de Spécification du Système d'interface de Données sur le Câble (DOCSIS) (10), comprenant :
une unité de traitement (24) configurable pour exécuter un algorithme pour la réalisation d'une opération d'équilibrage de charge pour les modems câbles (12) à travers des canaux du groupe d'équilibrage de charge ;
ladite unité de traitement (24) étant conçue pour collecter au moins un paramètre de qualité de service (QoS) pour chaque flux de service à partir des modems câbles (12) qui passent activement du trafic à travers un canal du groupe d'équilibrage de charge ;
ladite unité de traitement (24) étant conçue pour identifier si au moins un modem câble (12) a un flux de service avec une qualité inférieure de l'au moins un paramètre QoS par rapport à un seuil prédéfini, où un premier sous-ensemble de modems câbles (12) du groupe d'équilibrage de charge passant activement du trafic à travers le canal donné et ayant des flux de service avec une qualité inférieure de l'au moins un paramètre QoS est identifié à partir d'un second sous-ensemble de modems câbles (12) du groupe d'équilibrage de charge passant activement du trafic à travers le canal donné et ayant des flux de service n'ayant pas une qualité inférieure de l'au moins un paramètre QoS ; et
ladite unité de traitement étant conçue pour sélectionner l'au moins un modem câble (12) pour être déplacé du canal donné à un canal différent du groupe d'équilibrage de charge pour l'équilibrage de charge de flux de service actifs à travers les canaux du groupe d'équilibrage de charge, où les modems câbles (12) du second sous-ensemble de modems câbles ne sont pas considérés pour être sélectionnés afin d'être déplacés du canal donné à moins que tous les modems câbles dans le premier sous-ensemble de modems câbles (12) aient été déplacés et qu'un équilibrage de charge supplémentaire doive être réalisé.

10. Dispositif électronique de traitement de signaux selon la revendication 9, dans lequel le dispositif électronique de traitement de signaux est un système de terminaison par modem câble (CMTS) (14).

11. Dispositif électronique de traitement de signaux selon la revendication 9, comprenant en outre une unité émettrice-réceptrice (36) connectée à ladite unité de traitement pour la transmission et la réception de signaux de communication vers et à partir de modems câbles (12) à travers des canaux du groupe d'équilibrage de charge.

12. Dispositif électronique de traitement de signaux selon la revendication 9, dans lequel ladite unité de traitement inclut au moins un microprocesseur (26) pour le contrôle de l'opération d'équilibrage de charge.

13. Dispositif électronique de traitement de signaux selon la revendication 9, dans lequel le seuil prédéfini définit un seuil de qualité de service pour l'au moins un paramètre QoS, et dans lequel l'au moins un paramètre QoS est choisi dans un groupe constitué d'un débit minimal de trafic réservé, d'une tolérance de gigue, d'un débit maximal de trafic soutenu, d'une rafale de trafic maximale totale, des attributions de services d'attribution non sollicitée (UGS) par intervalle, et d'un intervalle d'attribution UGS, d'une priorité de trafic, d'une politique de transmission de demande, d'une taille de paquet minimale supposée du débit de trafic réservé, d'un intervalle de sondage nominal, et d'une taille d'attribution non sollicitée.

14. Dispositif électronique de traitement de signaux selon la revendication 9, dans lequel, si tous les modems câbles dans le premier sous-ensemble ont été déplacés et qu'un équilibrage de charge supplémentaire est requis, ladite unité de traitement est configurée pour la sélection d'un modem câble du second sous-ensemble ayant un flux de service avec une qualité la plus basse de l'au moins un paramètre QoS par rapport aux flux de service d'autres modems câbles restants dans le second sous-ensemble pour être déplacé depuis le premier canal pour un équilibrage de charge de flux de service actifs à travers les canaux du groupe d'équilibrage de charge.

15. Dispositif électronique de traitement de signaux selon la revendication 9, dans lequel l'unité de traitement est conçue pour appliquer au moins une opération parmi une opération de changement de canal en amont (UCC) et une opération de changement de canal dynamique (DCC) à l'au moins un modem câble sélectionné pour être déplacé.

16. Au moins un support de stockage lisible par ordinateur non provisoire ayant des instructions de programme informatique stockées sur celui-ci, qui sont prévues pour réaliser les opérations suivantes :
la collecte d'au moins un paramètre de qualité de service (QoS) pour chaque flux de service de modems câbles d'un groupe d'équilibrage de charge passant du trafic à travers un canal d'un ensemble de canaux prédéfini du groupe d'équilibrage de charge ;
l'utilisation de l'au moins un paramètre QoS collecté durant ladite étape de collecte pour chaque flux de service pour identifier si au moins un modem câble a un flux de service avec une qualité inférieure de l'au moins un paramètre QoS par rapport à un seuil prédéfini, où un premier sous-ensemble de modems câbles (12) du groupe d'équilibrage de charge passant activement du trafic à travers le canal donné et ayant des flux de service avec une qualité inférieure de l'au moins un paramètre QoS est identifié à partir d'un second sous-ensemble de modems câbles (12) du groupe d'équilibrage de charge passant activement du trafic à travers le canal donné et ayant des flux de service n'ayant pas une qualité inférieure de l'au moins un paramètre QoS ; et
la sélection de l'au moins un modem câble pour être déplacé du canal donné à un canal différent du groupe d'équilibrage de charge pour l'équilibrage de charge de flux de service actifs à travers de l'ensemble prédéfini de canaux du groupe d'équilibrage de charge, où les modems câbles (12) du second sous-ensemble de modems câbles ne sont pas considérés pour être sélectionnés afin d'être déplacés du canal donné à moins que tous les modems câbles dans le premier sous-ensemble de modems câbles (12) aient été déplacés et qu'un équilibrage de charge supplémentaire doive être réalisé.
